# FASCICULE DE BREVET EUROPEEN

(11) **EP 0 694 131 B1**
(45) Date de publication et mention de la délivrance du brevet: **04.06.1997**
(21) Numéro de dépôt: 94907585.7
(22) Date de dépôt: 17.02.1994
(51) Int. Cl.: F16D 55/226

(54) **FREIN A DISQUE UTILISANT UN PATIN TIRE A APPUI GLISSANT**
SCHEIBENBREMSE, EINEN GEZOGENEN BREMSKLOTZ MIT GLEITENDER AUFLAGE VERWENDEND
DISK BRAKE USING A SLIDINGLY ABUTTING DRAWN PAD

(30) Priorité: 15.04.1993 FR 9304392
(43) Date de publication de la demande: 31.01.1996
(73) Titulaire: Bosch Systemes de Freinage, 93700 Drancy (FR)
(72) Inventeur: MERY, Jean-Claude, F-93320 Pavillons-sous-Bois (FR); MALIGNE, Jean-Charles, F-93300 Aubervilliers (FR)
(74) Mandataire: Bentz, Jean-Paul
(86) Numéro de dépôt international: FR9400174
(87) Numéro de publication internationale: WO9424452

(56) Documents cités:
- EP-A- 0 357 469
- EP-B- 0 002 399
- GB-A- 1 526 258
- GB-A- 2 030 666
- US-A- 4 044 864

## Description

La présente invention concerne un frein à disque pour véhicule automobile, comprenant un premier support fixe par rapport au véhicule, un second support conformé en étrier et monté coulissant par rapport au premier, des patins dont chacun est maintenu par l'un des supports pour résister aux forces d'entraînement auxquelles il est soumis en cas de freinage, et un moteur de frein associé au second support et susceptible d'être actionné pour provoquer l'application desdits patins sur le disque suivant un mouvement sensiblement perpendiculaire à ce dernier, chaque patin présentant une zone centrale de friction et deux extrémités latérales dont la première est décalée par rapport à la zone centrale dans le sens de rotation du disque et dont la seconde au moins présente un profil d'entraînement, le support de ce patin présentant un profil de retenue coopérant avec ce profil d'entraînement pour retenir ce patin lorsqu'il est sollicité dans le sens de rotation du disque par les forces d'entraînement, et la première extrémité au moins de chaque patin présentant une surface de contact externe propre à buter sur une surface de contact interne correspondante d'un premier appui prévu sur le support de ce patin.

Des freins à disque de ce type sont connus depuis longtemps dans l'art antérieur, et un exemple en est donné dans le brevet US 4 044 864.

D'un point de vue théorique, ces freins présentent a priori l'avantage de permettre au patin, sur lequel s'appliquent les efforts d'entraînement en cas de freinage, de transmettre ces efforts au support qui le maintient en place, c'est-à-dire généralement au premier support appelé "chape", à travers chacune des deux extrémités de ce patin, dont l'une travaille ainsi en traction et l'autre en appui.

D'un point de vue concret, la situation est cependant très différente et beaucoup moins avantageuse, la simultanéité des efforts de traction et de poussée n'étant pratiquement jamais obtenue.

En effet, dans les freins connus du type précité, la répartition des efforts de traction et de poussée dépend de façon extrêmement critique à la fois des dimensions du patin et du support qui le reçoit, ces dimensions étant elles-mêmes non seulement soumises aux tolérances de fabrication, mais aussi aux déformations variables du frein sous l'effet d'efforts de freinage plus ou moins intenses, et/ou d'élévations de température plus ou moins importantes.

Dans ce contexte, l'invention a pour but de proposer un frein à disque et à étrier coulissant, dans lequel la transmission au support de patin des efforts reçus par ce dernier peut être réalisée aux deux extrémités du patin sans être soumise de façon gênante à l'influence de paramètres indésirables tels que ceux qui viennent d'être évoqués.

A cette fin, le frein à disque de l'invention est essentiellement caractérisé en ce que l'une des deux surfaces de contact en présence est concave et l'autre convexe, en ce que la surface de contact convexe a un profil arrondi, en ce que la surface de contact concave regarde dans une direction sensiblement perpendiculaire à un rayon du disque passant par la zone centrale de ce patin et présente au moins deux tangentes obliques par rapport à la direction dans laquelle regarde cette surface concave et formant entre elles un angle non nul, en ce qu'un jeu radial et un jeu tangentiel séparent les surfaces de contact concave et convexe en l'absence desdites forces d'entraînement, et en ce que chaque patin est sollicité par rapport à son support par une force élastique présentant au moins une première composante orientée suivant le rayon du disque qui passe par la zone centrale de ce patin et une seconde composante perpendiculaire au rayon du disque passant par la zone centrale du patin et orientée dans le sens de rotation du disque, ce dont il résulte que les surfaces de contact portent l'une contre l'autre avec une force d'appui non nulle, même en l'absence d'actionnement du frein.

Bien que l'utilisation de surfaces de contact concave et convexe soit décrite dans les brevets EP-B-0 002 399 et EP-A-357 469, chacun de ces documents antérieurs décrit un frein dans lequel le patin s'appuie exclusivement sur une seule branche de la chape, cette dernière devant donc, selon l'enseignement de ces documents antérieurs, être dimensionnée pour pouvoir absorber l'intégralité du couple de freinage.

Selon un mode de réalisation simple de l'invention, les deux surfaces de contact ont un profil arrondi, chaque surface de contact concave ayant un rayon de courbure supérieur au rayon de courbure de la surface convexe correspondante.

Par exemple, le profil d'entraînement peut comprendre une encoche, prévue sur le patin et ouverte vers l'intérieur du disque.

La surface de contact externe prévue sur le patin peut être convexe ou concave, et la première composante de la force élastique peut être centrifuge ou centripète.

Par ailleurs, la force élastique présente de préférence une seconde composante perpendiculaire au rayon du disque passant par la zone centrale du patin et orientée dans le sens de rotation du disque.

Dans le cas où il est souhaitable que le véhicule puisse être freiné avec une grande efficacité non seulement en marche avant, mais aussi en marche arrière, chaque patin comporte une surface de contact externe et un profil d'entraînement à chacune de ses extrémités.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe partielle d'un frein à disque conforme à l'invention ;
- la Figure 2 est une vue en coupe du frein à disque de la Figure 1 faite suivant la ligne II-II de cette figure ;
- la Figure 3 est une vue schématique illustrant le principe de l'invention dans un frein à disque conforme à un premier mode de réalisation ;
- la Figure 4 est une vue schématique illustrant le principe de l'invention dans un frein à disque conforme à un second mode de réalisation ;
- la Figure 5 est une vue schématique illustrant le principe de l'invention dans un frein à disque conforme à un troisième mode de réalisation ; et
- la Figure 6 représente une variante du frein illustré à la figure 3.
- La Figure 7 représente une autre variante du frein illustré à la Figure 3.

L'invention concerne de façon générale les freins à disque à étrier coulissant destinés à équiper les véhicules automobiles.

De tels freins comprennent un premier support 1, appelé "chape", fixe par rapport au véhicule, un second support 2 conformé en étrier et monté coulissant par rapport au premier, des patins 3, 4 dont chacun est maintenu par l'un des supports, généralement par la chape 1, pour résister aux forces d'entraînement auxquelles il est soumis en cas de freinage, et un moteur de frein 5 associé au second support 2 et susceptible d'être actionné pour provoquer l'application des patins 3, 4 sur le disque 6 suivant un mouvement sensiblement perpendiculaire à ce dernier.

Chaque patin 3, 4 présente de façon classique une zone centrale de friction, telle que 30, et deux extrémités latérales 31, 32 dont la première 31 est décalée par rapport à la zone centrale 30 dans le sens de rotation S du disque 6 et dont la seconde 32 au moins présente un profil d'entraînement 32a.

De son côté, le support de ce patin, par exemple la chape 1 présente un profil de retenue 7a coopérant avec le profil d'entraînement 32a du patin 3 pour retenir ce dernier lorsqu'il est sollicité dans le sens de rotation S du disque 6 par les forces d'entraînement.

Par ailleurs, la première extrémité 31 au moins de chaque patin, tel que 3, présente une surface de contact externe 31b propre à buter sur une surface de contact interne correspondante 8b d'un premier appui 8 prévu sur le support 1 de ce patin.

Selon l'invention, l'une des deux surfaces de contact 31b, 8b est concave et l'autre convexe, la surface de contact convexe ayant un profil arrondi.

La surface de contact concave regarde dans une direction sensiblement perpendiculaire à un rayon R du disque 6 passant par la zone centrale 30 de ce patin, à savoir la direction de la droite X, et présente au moins deux tangentes T1 et T2, obliques par rapport à la direction de cette droite X et formant entre elles un angle non nul G.

Par convention, le mot "obliques" est ici compris comme s'appliquant à deux directions faisant entre elles un angle non nul et différent à la fois d'un angle plat et d'un angle droit.

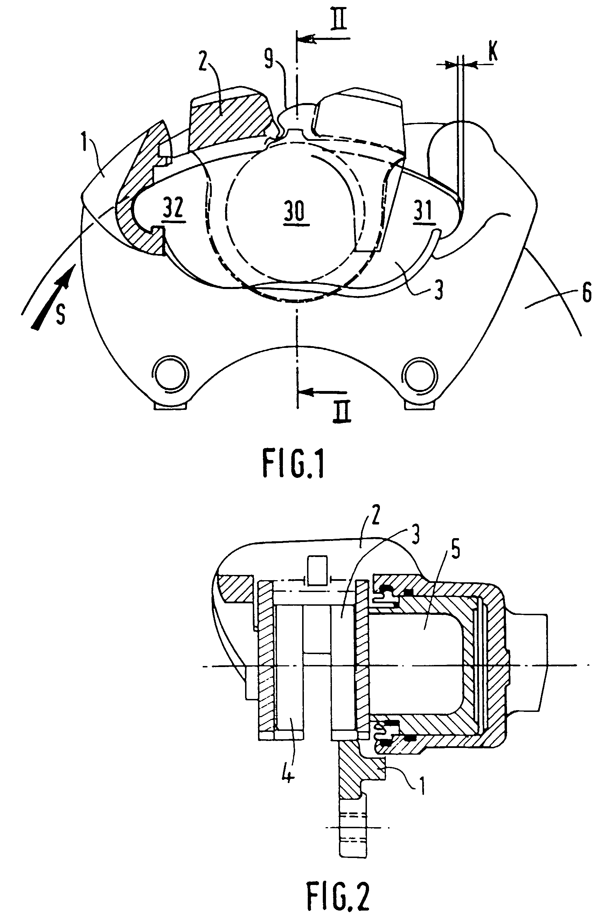

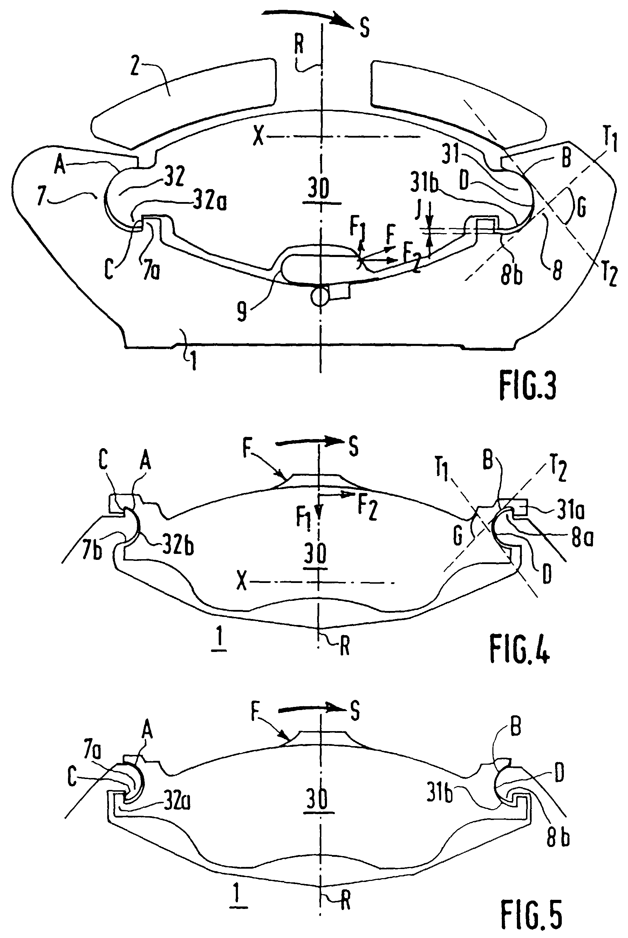

Un jeu radial J (figure 3) et un jeu tangentiel K (figure 1) séparent les surfaces de contact concave et convexe 31b, 8b en l'absence de forces d'entraînement c'est-à-dire dans l'état de repos du frein ou en l'absence de rotation du disque, et chaque patin, tel que 30, est sollicité par rapport à son support 1 par une force élastique F exercée par un ressort 9 et présentant au moins une première composante F1 orientée suivant le rayon R du disque 6 qui passe par la zone centrale 30 de ce patin.

Grâce à ces caractéristiques, les surfaces de contact 31b, 8b portent l'une contre l'autre avec une force d'appui non nulle, même en l'absence d'actionnement du frein, et malgré la présence des jeux nécessaires.

La surface concave peut adopter une forme polygonale régulière, et même éventuellement la forme d'un dièdre rentrant.

Cependant, les deux surfaces de contact 31b, 8b ont de préférence un profil arrondi comme le montrent les figures 1 et 3 à 6, chaque surface de contact concave ayant un rayon de courbure supérieur au rayon de courbure de la surface convexe correspondante.

Le profil d'entraînement 32a prévu sur le patin peut adopter la forme d'une encoche ouverte vers l'intérieur du disque comme le montrent les figures 3 et 4, ou d'une encoche ouverte vers l'extérieur du disque comme le montre la figure 5.

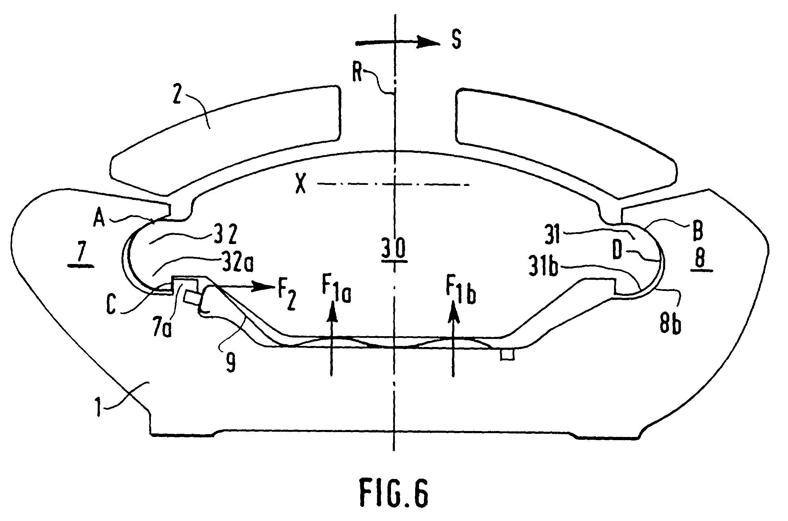

La surface de contact externe 31b du patin peut être la surface convexe (figures 3 et 6), ou elle peut constituer la surface de contact concave (figures 4 et 5). Par ailleurs, la première composante F1 de la force élastique est de préférence centrifuge, c'est-à-dire tournée vers l'extérieur du disque 6, mais peut aussi être centripète, c'est-à-dire tournée vers l'intérieur du disque 6.

Dans tous les cas, il est souhaitable que la force élastique F exercée par le ressort 9 présente une seconde composante F2 perpendiculaire au rayon R du disque 6 qui passe par la zone centrale 30 du patin et orientée dans le sens de rotation S du disque.

Le ressort 9, qui est disposé entre le patin 3 et son support 1 (figures 1, 3 et 6), peut exercer des efforts répartis, comme le montre la figure 6 qui représente un mode de réalisation dans lequel les composantes F1 et F2 de la force élastique F sont exercées séparément, la première composante F1 étant elle-même constituée de deux sous-composantes F1a et F1b.

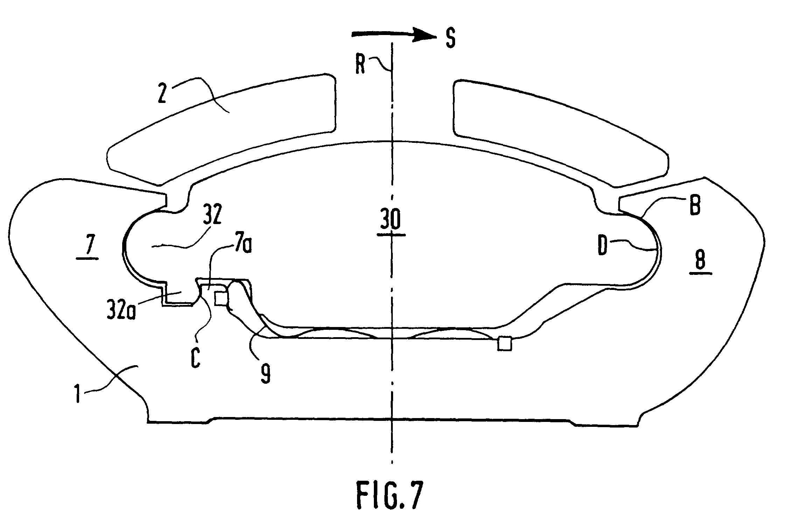

Comme le montre la Figure 7, le profil d'entraînement 32a du patin et le profil de retenue 7a de son support peuvent présenter des faces en vis-à-vis de formes arrondies et complémentaires pour diminuer les contraintes locales.

Enfin, comme le montrent les figures 3 à 5, chaque patin peut comporter une surface de contact externe 31b, 32b et un profil d'entraînement 31a, 32a à chacune de ses deux extrémités 31 et 32, coopérant avec les surfaces internes 8b, 7b et les profils de retenue 8a, 7a, d'appuis respectifs 8, 7.

Grâce à ces caractéristiques, le patin 30 et son support 1 (figures 3 à 6) se trouvent en contact l'un avec l'autre par les points A, B et C dans l'état de repos du frein, et par les points C et D en cas de freinage du véhicule suffisamment intense pour provoquer une déformation maximale du frein, la seconde extrémité 32 du patin 3 se trouvant toujours accrochée au point C, et la première extrémité de ce patin trouvant en toutes circonstances un appui sur le support 1 au point B, au point D, ou sinon en un point intermédiaire entre les points B et D dont la position dépend des jeux fonctionnels J et K, mais dont l'existence n'est pas conditionnée par les paramètres de fabrication (tolérances) ou d'utilisation (dilatations thermiques, déformations) auxquels ces jeux sont soumis.

## Revendications

1. Frein à disque pour véhicule automobile, comprenant un premier support (1) fixe par rapport au véhicule, un second support (2) conformé en étrier et monté coulissant par rapport au premier, des patins (3, 4) dont chacun est maintenu par l'un des supports (1) pour résister aux forces d'entraînement auxquelles il est soumis en cas de freinage, et un moteur de frein (5) associé au second support (2) et susceptible d'être actionné pour provoquer l'application desdits patins sur le disque (6) suivant un mouvement sensiblement perpendiculaire à ce dernier, chaque patin (3) présentant une zone centrale de friction (30) et deux extrémités latérales (31, 32) dont la première (31) est décalée par rapport à la zone centrale dans le sens de rotation (S) du disque (6) et dont la seconde (32) au moins présente un profil d'entraînement (32a), le support de ce patin présentant un profil de retenue (7a) coopérant avec ce profil d'entraînement pour retenir ce patin lorsqu'il est sollicité dans le sens de rotation du disque par les forces d'entraînement, et la première extrémité au moins (31) de chaque patin présentant une surface de contact externe (31b) propre à buter sur une surface de contact interne correspondante (8b) d'un premier appui (8) prévu sur le support de ce patin, caractérisé en ce que l'une de ces deux surfaces de contact (31b, 8b) est concave et l'autre convexe, en ce que la surface de contact convexe a un profil arrondi, en ce que la surface de contact concave regarde dans une direction sensiblement perpendiculaire à un rayon (R) du disque (6) passant par la zone centrale (30) de ce patin et présente au moins deux tangentes (T1, T2) obliques par rapport à la direction dans laquelle regarde cette surface concave et formant entre elles un angle non nul (G), en ce qu'un jeu radial (J) et un jeu tangentiel (K) séparent les surfaces de contact concave et convexe (31b, 8b) en l'absence desdites forces d'entraînement, en ce que chaque patin (30) est sollicité par rapport à son support par une force élastique(F) présentant au moins une première composante (F1) orientée suivant le rayon (R) du disque qui passe par la zone centrale de ce patin et une seconde composante (F2) perpendiculaire au rayon (R) du disque passant par la zone centrale du patin et orientée dans le sens de rotation du disque, et en ce que chaque patin et son support portent l'un contre l'autre avec une force d'appui non nulle, même en l'absence d'actionnement du frein, à la fois par contact mutuel desdites surfaces de contact et par contact mutuel desdits profils d'entraînement et de retenue.

2. Frein à disque suivant la revendication 1, caractérisé en ce que les deux surfaces de contact (31b, 8b) ont un profil arrondi, chaque surface de contact concave ayant un rayon de courbure supérieur au rayon de courbure de la surface convexe correspondante.

3. Frein à disque suivant la revendication 1 ou 2, caractérisé en ce que le profil d'entraînement comprend une encoche (32a) prévue sur le patin et ouverte vers l'intérieur du disque (6).

4. Frein à disque suivant l'une quelconque des revendications précédentes, caractérisé en ce que ladite surface de contact (31b) prévue sur le patin est convexe.

5. Frein à disque suivant l'une quelconque des revendications précédentes, caractérisé en ce que la première composante (F1) de la force élastique est centrifuge.

6. Frein à disque suivant l'une quelconque des revendications précédentes, caractérisé en ce que chaque patin comporte une surface de contact externe et un profil d'entraînement à chacune de ses extrémités.

7. Frein à disque suivant l'une quelconque des revendications précédentes, caractérisé en ce que chaque profil d'entraînement (32a) et chaque profil de retenue correspondant (7a) présentent des faces en vis-à-vis de formes arrondies et complémentaires.

## Patentansprüche

1. Scheibenbremse für ein Kraftfahrzeug, mit einem fahrzeugfesten ersten Träger (1), einem zweiten Träger (2), der als Bremssattel ausgebildet ist und bezüglich des ersten verschiebbar angebracht ist, Bremsbelägen (3, 4), von denen jeder von einem der Träger (1) gehalten ist, um den Mitnahmekräften zu widerstehen, denen er bei einer Bremsung ausgesetzt ist, und einer Bremsbetätigungsvorrichtung (5), die dem zweiten Träger (2) zugeordnet ist und betätigt werden kann, um das Anlegen der Bremsbeläge an die Scheibe (6) mit einer zu dieser im wesentlichen senkrechten Bewegung hervorzurufen, wobei jeder Bremsbelag (3) eine mittlere Reibungszone (30) und zwei Seitenenden (31, 32) aufweist, von denen das erste (31) bezüglich der Mittelzone in der Drehrichtung (S) der Scheibe (6) versetzt ist und von denen wenigstens das zweite (32) ein Mitnahmeprofil (32a) aufweist, wobei der Träger dieses Bremsbelags ein Halteprofil (7a) aufweist, das mit diesem Mitnahmeprofil zusammenwirkt, um den Bremsbelag zurückzuhalten, wenn er in der Drehrichtung der Scheibe von den Mitnahmekräften beaufschlagt wird, und wobei wenigstens das erste Ende (31) jedes Bremsbelags eine äußere Berührfläche (31b) aufweist, die an einer entsprechenden inneren Berührfläche (8b) eines ersten Anschlags (8) anliegen kann, der an dem Träger dieses Bremsbelags vorgesehen ist, dadurch gekennzeichnet, daß eine dieser beiden Berührflächen (31b, 8b) konkav und die andere konvex ist, daß die konvexe Berührfläche ein abgerundetes Profil hat, daß die konkave Berührfläche in einer Richtung ausgerichtet ist, die im wesentlichen senkrecht zu einem durch die Mittelzone (30) dieses Bremsbelags laufenden Radius (R) der Scheibe (6) ist, und wenigstens zwei Tangenten (T1, T2) aufweist, die bezüglich der Richtung schräg verlaufen, in der diese konkave Fläche ausgerichtet ist, und die zwischen sich einen von Null verschiedenen Winkel (G) bilden, daß beim Fehlen der Mitnahmekräfte ein radiales Spiel (J) und ein tangentiales Spiel (K) die konkave und die konvexe Berührfläche (31b, 8b) voneinander trennen, daß jeder Bremsbelag (30) bezüglich seines Trägers von einer elastischen Kraft (F) beaufschlagt ist, die wenigstens eine erste Komponente (F1) enthält, die entlang dem Radius (R) der Scheibe ausgerichtet ist, der durch die Mittelzone dieses Bremsbelags verläuft, und eine zweite Komponente (F2), die senkrecht zu dem durch die Mittelzone dieses Bremsbelags laufenden Radius (R) der Scheibe ist und in der Drehrichtung der Scheibe ausgerichtet ist, und daß jeder Bremsbelag und sein Träger selbst ohne Betätigung der Bremse mit einer von Null verschiedenen Abstützkraft aneinander anliegen, und zwar gleichzeitig durch gegenseitige Berührung der Berührflächen und durch gegenseitige Berührung des Mitnahmeprofils und des Halteprofils.

2. Scheibenbremse nach Anspruch 1, dadurch gekennzeichnet, daß die beiden Berührflächen (31b, 8b) ein abgerundetes Profil haben, wobei jede konkave Berührfläche einen Krümmungsradius hat, der größer als der Krümmungsradius der entsprechenden konvexen Fläche ist.

3. Scheibenbremse nach Anspruch 1 oder Anspruch 2, dadurch gekennzeichnet, daß das Mitnahmeprofil einen Einschnitt (32a) aufweist, der an dem Bremsbelag vorgesehen ist und zum Inneren der Scheibe (6) geöffnet ist.

4. Scheibenbremse nach einem der vorhergehenden Ansprüche, dadurch gekennzeichnet, daß die an dem Bremsbelag vorgesehene Berührfläche (31b) konvex ist.

5. Scheibenbremse nach einem der vorhergehenden Ansprüche, dadurch gekennzeichnet, daß die erste Komponente (F1) der elastischen Kraft zentrifugal ausgerichtet ist.

6. Scheibenbremse nach einem der vorhergehenden Ansprüche, dadurch gekennzeichnet, daß jeder Bremsbelag an jedem seiner Enden eine äußere Berührfläche und ein Mitnahmeprofil aufweist.

7. Scheibenbremse nach einem der vorhergehenden Ansprüche, dadurch gekennzeichnet, daß jedes Mitnahmeprofil (32a) und jedes entsprechende Halteprofil (7a) gegenüberliegende Flächen mit abgerundeten und komplementären Formen aufweisen.

## Claims

1. Disk brake for a motor vehicle, comprising a first support (1) which is fixed with respect to the vehicle, a second support (2) shaped into a caliper and slidably mounted with respect to the first one, pads (3, 4) each of which is held by one of the supports (1) so as to resist the drive forces to which it is subjected in the event of braking, and a brake motor (5) associated with the second support (2) and capable of being actuated so as to give rise to the application of said pads onto the disk (6) according to a movement which is substantially perpendicular to the latter, each pad (3) having a central friction zone (30) and two lateral ends (31, 32) the first (31) of which is offset with respect to the central zone in the direction of rotation (S) of the disk (6) and at least the second (32) of which has a drive profile (32a), the support of this pad having a retaining profile (7a) interacting with this drive profile in order to retain this pad when it is stressed in the direction of rotation of the disk by the drive forces, and at least the first end (31) of each pad having an external contact surface (31b) suitable for abutting against a corresponding internal contact surface (8b) of a first bearing surface (8) provided on the support for this pad, characterized in that one of these two contact surfaces (31b, 8b) is concave and the other convex, in that the convex contact surface has a rounded profile, in that the concave contact surface points in a direction which is substantially perpendicular to a radius (R) of the disk (6) passing through the central zone (30) of this pad and has at least two tangents (T1, T2) which are oblique with respect to the direction in which this concave surface points, and between them forming a non-zero angle (G), in that a radial clearance (J) and a tangential clearance (K) separate the concave and convex contact surfaces (31b, 8b) in the absence of said drive forces, and in that each pad (30) is stressed with respect to its support by an elastic force (F) having at least a first component (F1) pointing along the radius (R) of the disk which passes through the central zone of this pad and a second component (F2) perpendicular to the radius (R) of the disk passing through the central zone of the pad and pointing in the direction of rotation of the disk, from which it results that the contact surfaces bear one against the other with a non-zero bearing force, even in the absence of actuation of the brake.

2. Disk brake according to Claim 1, characterized in that the two contact surfaces (31b, 8b) have a rounded profile, each concave contact surface having a radius of curvature which is greater than the radius of curvature of the corresponding convex surface.

3. Disk brake according to Claim 1 or 2, characterized in that the drive profile comprises a slot (32a) provided on the pad and open towards the inside of the disk (6).

4. Disk brake according to any one of the preceding claims, characterized in that the said contact surface (31b) provided on the pad is convex.

5. Disk brake according to any one of the preceding claims, characterized in that the first component (F1) of the elastic force is centrifugal.

6. Disk brake according to any one of the preceding claims, characterized in that each pad includes an external contact surface and a drive profile at each of its ends.

7. Disk brake according to any one of the preceding claims, characterized in that each drive profile (32a) and each corresponding retaining profile (7a) has opposing faces of rounded and complementary shapes.
